# EUROPÄISCHE PATENTANMELDUNG

(11) **EP 3 686 073 A1**
(43) Veröffentlichungstag der Anmeldung: **29.07.2020**
(21) Anmeldenummer: 20152480.8
(22) Anmeldetag: 17.01.2020
(51) Int. Cl.: B60T 8/1763, B60T 8/172, B60W 30/18, B60W 40/068

(54) **VERFAHREN UND VORRICHTUNG ZUR STEUERUNG EINER ANFAHRHILFE EINES FAHRZEUGS**

(30) Priorität: 24.01.2019 DE 102019101704
(71) Anmelder: MAN Truck & Bus SE, 80995 München (DE)
(72) Erfinder: Gerritzen, Ralph, 82110 Germering (DE)
(74) Vertreter: v. Bezold & Partner Patentanwälte - PartG mbB

(57) **Zusammenfassung**

Die Erfindung betrifft ein Verfahren und eine Vorrichtung zur Steuerung einer Anfahrhilfe eines Fahrzeugs, vorzugsweise eines Nutzfahrzeugs. Das Verfahren umfasst: Ermitteln (S10) zumindest einer Information (30) über einen Zustand der Fahrbahnoberfläche (11); Steuern (S20) der Anfahrhilfe (14), wenn in Abhängigkeit von der zumindest einen Information (30) ermittelt wurde, ob die Anfahrhilfe (14) erforderlich ist oder nicht mehr erforderlich ist, wobei eine Information über den Zustand der Fahrbahnoberfläche anhand von Reifengeräuschen (8) des Fahrzeugs (1) oder eines vorbeifahrenden Fremdfahrzeugs ermittelt werden, die mittels eines akustischen Sensors (3) des Fahrzeugs erfasst werden.

## Beschreibung

Die Erfindung betrifft ein Verfahren zur Steuerung einer Anfahrhilfe eines Fahrzeugs, vorzugsweise eines Nutzfahrzeugs. Die Erfindung betrifft ferner eine Vorrichtung zur Steuerung einer solchen Anfahrhilfe.

Insbesondere für Nutzfahrzeuge sind automatische Anfahrhilfen, auch als Traktionshilfen bezeichnet, bekannt, welche es dem Fahrer erlauben, bei unsicheren Straßenverhältnissen die Anfahrhilfe zuzuschalten, wodurch ein Anfahrvorgang erleichtert wird. Als Anfahrhilfe für Nutzfahrzeuge ist bekannt, bei mehrachsigen Fahrzeugen, welche beispielsweise über eine dritte Hilfsachse in Form einer Liftachse verfügen, diese Hilfsachsen kurzfristig zu entlasten bzw. anzuheben und somit die Achslast auf die verbleibenden Achsen und insbesondere auf angetriebene Achsen zu erhöhen. Durch die erhöhte Achslast kann auch eine erhöhte Traktion bei rutschigen Fahrbahnverhältnissen erreicht werden. Dabei ist es möglich, die offiziell zulässige maximale Achslast kurzfristig zu überschreiten, um die nötige Traktion beispielsweise als Anfahrhilfe zu erreichen. Als Traktionshilfen sind beispielsweise ferner automatische Schneeketten bekannt, welche bei Nutzfahrzeugen, insbesondere bei Lastkraftwagen, an den Antriebsachsen angebracht sein können und mittels eines Schleudermechanismus zwischen Fahrbahn und Reifen ausgebracht werden, um so die Traktion auf einem rutschigen Untergrund wie einer verschneiten oder vereisten Fahrbahn zu erhöhen.

Um die Achslastverlagerung bzw. Achslastentlastung der Hilfsachse zur Anfahrhilfe auszuführen, muss der Fahrer zunächst die rutschige, beispielsweise schneebedeckte oder vereiste Fahrbahnoberfläche, erkennen und dann manuell die entsprechende Anfahrhilfe aktivieren.

Um diese durch den Fahrer durchgeführte Erkennung des Zustands der Fahrbahnoberfläche zu vermeiden, wird in der Offenlegungsschrift DE 10 2011 015 510 A1 vorgeschlagen, die Beschaffenheit der Fahrbahnoberfläche optisch mittels ausgesendetem und von der Fahrbahn reflektiertem Licht zu erkennen und entsprechend die Anfahrhilfe automatisch bei Bedarf anzusteuern.

Ein Nachteil dieses Ansatzes ist, dass die Erkennung der Beschaffenheit der Fahrbahnoberfläche mittels reflektierter Strahlung, beispielsweise Infrarotstrahlung, insbesondere bei schneebedeckter Fahrbahn ungenau ist, da die Reflexion von Licht an einer Schneeoberfläche sehr unterschiedlich sein kann. Entsprechend werden Fahrsituationen dahingehend, ob die Anfahrhilfe benötigt wird oder nicht, oftmals falsch eingeschätzt.

Es ist daher eine Aufgabe der vorliegenden Erfindung, die Nachteile des Standes der Technik zu überwinden. Die Aufgabe der Erfindung ist es insbesondere, einen verbesserten Ansatz bereitzustellen, um Fahrsituationen dahingehend zuverlässiger automatisch einschätzen zu können, ob die Anfahrhilfe benötigt wird oder nicht.

Diese Aufgaben werden durch Vorrichtungen und Verfahren mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert. Ferner bezieht sich die Erfindung auf ein Fahrzeug, welches mit einer entsprechenden Vorrichtung ausgestattet ist und in welchem das erfindungsgemäße Verfahren ausgeführt wird.

Das erfindungsgemäße Verfahren zur Steuerung einer Anfahrhilfe eines Fahrzeugs umfasst hierbei die Schritte des Ermittelns zumindest einer Information über einen Zustand der Fahrbahnoberfläche und des Steuerns der Anfahrhilfe, wenn in Abhängigkeit von der zumindest einen Information ermittelt wurde, ob die Anfahrhilfe erforderlich ist oder nicht mehr erforderlich ist.

Mit dem Verfahren und der Vorrichtung kann vorteilhaft eine Anfahrhilfe, auch als Traktionshilfe bezeichnet, bereits bei stehendem Fahrzeug automatisch zugeschaltet werden, da anhand der automatischen Ermittlung des Zustands der Fahrbahnoberfläche die rutschige Fahrbahnoberfläche, z. B. aufgrund einer schneebedeckten oder vereisten Fahrbahn, bereits vor dem Anfahren erkannt werden kann.

Das Verfahren und die Vorrichtung können auch verwendet werden, um eine Anfahrhilfe abzuschalten, wenn dies der Zustand bzw. die Beschaffenheit der Fahrbahnoberfläche nicht mehr erforderlich macht.

Das Fahrzeug kann ein Nutzfahrzeug sein, vorzugsweise ein Nutzfahrzeug, das mindestens eine Hilfsachse, z. B. eine Vorlaufachse oder Nachlaufachse, aufweist, die als Liftachse ausgeführt ist. Die Anfahrhilfe kann eine Achsentlastung umfassen, wie sie dem Fachmann ebenfalls aus dem Stand der Technik bekannt ist, so dass das Steuern der Anfahrhilfe das Entlasten und/oder Anheben einer Achse des Fahrzeugs umfasst. Gemäß dieser Ausführungsform ist die Anfahrhilfe dadurch ausgebildet, dass durch Anheben oder Entlasten der Liftachse die Achslast auf die verbleibenden Achsen und insbesondere auf angetriebene Achsen erhöht wird, wodurch eine erhöhte Traktion bei rutschigen Fahrbahnverhältnissen erreicht werden kann. Die Anfahrhilfe kann ferner automatische Schneeketten umfassen, wie sie an sich dem Fachmann bekannt sind.

Die zumindest eine Information über einen Zustand der Fahrbahnoberfläche kann umfassen, ob die Fahrbahnoberfläche vereist oder schneebedeckt ist. Die Anfahrhilfe wird vorzugsweise aktiviert, falls die Fahrbahnoberfläche schneebedeckt oder vereist ist.

Gemäß einer besonders bevorzugten Ausführungsvariante wird eine Information über den Zustand der Fahrbahnoberfläche anhand von Reifengeräuschen des Fahrzeugs oder eines vorbeifahrenden Fremdfahrzeugs ermittelt, die mittels eines akustischen Sensors des Fahrzeugs erfasst werden. Anhand der erfassten Reifengeräusche des Fahrzeugs kann auf besonders zuverlässige Weise erkannt werden, ob beispielsweise die Fahrbahn schneebedeckt ist, da die Reifengeräusche bei schneebedeckter Fahrbahn hierfür charakteristische Abrollgeräusche erzeugen, die zuverlässig von Reifengeräuschen bei nicht schneebedeckter Fahrbahn unterschieden werden können. Da die Anfahrhilfe in der Mehrzahl der Fälle bei schneebedeckter Fahrbahn erforderlich ist, kann auf diese Weise eine besonders zuverlässige automatische Einschätzung erfolgen, ob die Anfahrhilfe aktuell benötigt wird oder nicht. Der akustische Sensor kann mindestens ein an der Unterseite des Fahrzeugs angeordnetes Mikrofon umfassen, das so angeordnet ist, dass es Abrollgeräusche eines oder mehrerer Reifen erfassen kann.

Die Erkennung eines Zustands der Fahrbahnoberfläche anhand der Auswertung von akustischen Reifengeräuschen ist an sich aus dem Stand der Technik bekannt und daher hier nicht näher beschrieben. Lediglich beispielhaft wird auf die Dokumente DE 10 2004 04791 A1, DE 10 2008 062 735 A1 und US 5,852,243 A verwiesen.

Alternativ oder zusätzlich kann gemäß einem weiteren Aspekt der Erfindung die zumindest eine Information über einen Zustand der Fahrbahnoberfläche mittels eines elektronischen Bremsregelsystems, beispielsweise eines elektronischen Stabilitätsprogramms (ESP)-, Antiblockiersystem (ABS)- und/oder Antriebsschlupfregelung (ASR)-Systems, bestimmt werden. Wenn beispielsweise anhand des Bremsregelsystems festgestellt wird, dass das Fahrzeug bei einem Anfahrvorgang ausbricht oder mindestens ein Rad durchdreht, kann hieraus gefolgert werden, dass der Zustand der Fahrbahnoberfläche derart ist, dass eine Anfahrhilfe erforderlich ist und/oder dass die Anfahrhilfe aktiviert werden soll.

Alternativ oder zusätzlich kann gemäß einem weiteren Aspekt der Erfindung die zumindest eine Information über einen Zustand der Fahrbahnoberfläche mittels eines von einer Kamera des Fahrzeugs erfassten Bildes der Fahrbahnoberfläche bestimmt werden. Anhand des Bilds des Fahrbahnoberfläche kann beispielsweise mittels Bildanalyse bestimmt werden, ob die Fahrbahn schneebedeckt oder vereist ist.

Alternativ oder zusätzlich kann gemäß einem weiteren Aspekt der Erfindung die zumindest eine Information über einen Zustand der Fahrbahnoberfläche mittels eines von einer Kamera des Fahrzeugs erfassten Bildes eines Verkehrszeichens und/oder einer Verkehrsanzeige bestimmt werden, wenn das Verkehrszeichens und/oder die Verkehrsanzeige einen Hinweis auf eine Schnee- oder Glatteiswarnungen anzeigt.

Alternativ oder zusätzlich kann gemäß einem weiteren Aspekt der Erfindung die zumindest eine Information über einen Zustand der Fahrbahnoberfläche anhand eines Betriebs eines Scheibenwischers bestimmt wird, falls dieser unterhalb einer vorbestimmten Temperaturschwelle aktiviert ist. Falls beispielsweise der Scheibenwischer bei einem Anfahrvorgang bei Temperaturen unter dem Gefrierpunkt (0 °C) und um dem Gefrierpunkt betrieben wird, ist die Wahrscheinlichkeit erhöht, dass die Fahrbahn schneebedeckt oder vereist ist.

Alternativ oder zusätzlich kann gemäß einem weiteren Aspekt der Erfindung die zumindest eine Information über einen Zustand der Fahrbahnoberfläche unter Verwendung einer sensorisch erfassten Umgebungstemperatur bestimmt werden. Hierbei ist es vorteilhaft, die Umgebungstemperatur in Kombination mit einer der anderen in diesem Dokument beschriebenen Ansätze und Informationen (wie Reifengeräuscherkennung, Bildauswertung der Fahrbahnoberfläche, Informationen eines Bremsregelsystems, Scheibenwischerbetrieb) zu verwenden. Beispielsweise kann zuerst geprüft werden, ob die Umgebungstemperatur in einem Bereich liegt, in dem schneebedeckte und/oder vereiste Straßen auftreten können. Falls ja, kann eine Überprüfung des Zustands der Fahrbahnoberfläche anhand der einen oder mehrerer der anderen in diesem Dokument beschriebenen Ansätze und Informationen erfolgen.

Es wird betont, dass zur Steuerung der Anfahrhilfe jeder der in diesem Dokument beschriebenen Ansätze allein oder in Kombination mit anderen Ansätzen zur Ermittlung einer Information über den Zustand der Fahrbahnoberfläche verwendet werden kann. Beispielsweise kann anstelle oder zusätzlich zu der Verwendung der akustisch erfassten Reifengeräusche des Fahrzeugs auch anhand von Informationen des Bremsregelsystem der Zustand der Fahrbahnoberfläche ermittelt werden und festgestellt werden, ob eine Anfahrhilfe benötigt wird.

Gemäß einer besonders bevorzugten Ausführungsform werden mehrere der vorgenannten Ansätze kombiniert, um auf diese Weise eine besonders zuverlässige und genaue Ermittlung des Zustands der Fahrbahnoberfläche zu erzielen und um Fahrsituationen dahingehend zuverlässiger automatisch einschätzen zu können, ob die Anfahrhilfe benötigt wird oder nicht. Entsprechend diesem Aspekt können zur Ermittlung der zumindest einen Information über einen Zustand der Fahrbahnoberfläche zumindest zwei, weiter vorzugsweise zumindest drei, der folgenden Informationen zur Ermittlung des Zustands der Fahrbahnoberfläche fusioniert werden:
a) eine Umgebungstemperatur;
b) Reifengeräusche des Fahrzeugs oder eines vorbeifahrenden Fremdfahrzeugs, die mittels eines akustischen Sensors des Fahrzeugs erfasst werden;
c) eine Information eines elektronischen Bremsregelsystems;
d) eine Information eines von einer Kamera des Fahrzeugs erfassten Bildes der Fahrbahnoberfläche und/oder eines Hinweise auf Schnee- oder Glatteiswarnungen anzeigenden Verkehrszeichens; und
e) Betriebsinformationen eines Scheibenwischers.

Die Fusionierung erfolgt vorzugsweise in einer Steuereinrichtung des Fahrzeugs, beispielsweise in einem zentralen Steuergerät.

Eine mögliche Realisierung sieht hierbei vor, dass zunächst bestimmt wird, ob die aktuelle Umgebungstemperatur unterhalb eines vorbestimmten Schwellenwerts liegt, der so gewählt ist, dass unterhalb dieses Schwellenwerts die Temperaturen niedrig genug sind, um schneebedeckte Straßen oder vereiste Straßen zu ermöglichen. Der vorbestimmte Schwellenwert kann beispielsweise auf einen Wert von 0 °C (Gefrierpunkt) oder auf einen Wert in der Nähe des Gefrierpunkts festgelegt werden. Falls die Umgebungstemperatur unterhalb des Schwellenwerts liegt, werden ein oder mehrere der in diesem Dokument beschriebenen Ansätze und Informationen (wie Reifengeräuscherkennung, Bildauswertung der Fahrbahnoberfläche, Informationen eines Bremsregelsystems, Scheibenwischerbetrieb) herangezogen, um einen Zustand der Fahrbahnoberfläche zu ermitteln. Beispielsweise kann nur dann, wenn die Umgebungstemperatur unterhalb eines vordefinierten Schwellenwertes liegt, von der Steuereinrichtung anhand von erfassten Reifengeräuschen, erfassten Kamerabildern der Fahrbahnoberfläche oder eines Verkehrszeichens, Betriebsinformationen eines Scheibenwischers und/oder Informationen eines elektronischen Bremsregelsystems ermittelt werden, ob die Fahrbahnoberfläche vereist oder schneebedeckt ist.

Gemäß einem weiteren vorteilhaften Aspekt können die Reifengeräusche des Fahrzeugs oder eines vorbeifahrenden Fremdfahrzeugs, die mittels eines akustischen Sensors des Fahrzeugs erfasst werden, unter Verwendung eines künstlichen neuronalen Netzes ausgewertet werden, um die Information über einen Zustand der Fahrbahnoberfläche zu ermitteln. Eine solche Auswertung der Reifengeräusche mittels eines künstlichen neuronalen Netzes kann beispielsweise realisiert werden mittels des Ansatzes, der in der Veröffentlichung *"*Automatic Detection of Road Surface States from Tire Noise Using Neural Network Analysis", W. Kongrattanaprasert et al., Proceedings of 20th International Congress on Acoustics, ICA 2010, offenbart ist.

Gemäß einer weiteren Ausführungsform besteht die Möglichkeit, dass, falls das Fahrzeug in einem elektronisch verbunden Konvoi mit mindestens einem Fremdfahrzeug fährt, im sog. Platooning-Betrieb, und die Anfahrhilfe des Fahrzeugs aktiviert wurde, dann eine Nachricht von dem Fahrzeug für die Fremdfahrzeuge des Konvois erzeugt wird, die angibt, dass die Anfahrhilfe des Fahrzeugs aktiviert wurde. Auf dieser Weise kann bei einer automatischen Aktivierung der Anfahrhilfe diese Information schnell an die weiteren Fahrzeuge im Platoon weitergegeben werden, um ein sicheres Anfahren aller Fahrzeuge des Platoons zu ermöglichen.

Das erfindungsgemäße Verfahren zur Steuerung einer Anfahrhilfe eines Fahrzeugs umfasst Mittel zur Erfassung zumindest einer Information über einen Zustand der Fahrbahnoberfläche und eine Steuereinrichtung, die ausgebildet ist, zumindest eine Information über einen Zustand der Fahrbahnoberfläche zu ermitteln und die Anfahrhilfe anzusteuern, wenn in Abhängigkeit von der Information ermittelt wurde, ob die Anfahrhilfe erforderlich ist oder nicht mehr erforderlich ist. Die Steuereinrichtung kann hierbei die Anfahrhilfe unmittelbar ansteuern oder mittelbar, z. B. durch Ansteuerung eines Steuergeräts, das wiederum eine Liftmechanismus der Achse ansteuert. Letzteres kann ein Luftfeder-Steuergerät sein, das über einen CAN-Datenbus angesteuert wird.

Gemäß einer Ausführungsform kann die Vorrichtung als Mittel zur Erfassung zumindest einer Information über einen Zustand der Fahrbahnoberfläche einen akustischen Sensor zur Erfassung von Reifengeräuschen des Fahrzeugs oder eines vorbeifahrenden Fremdfahrzeugs umfassen. Die Steuereinrichtung kann ausgebildet sein, eine Information über den Zustand der Fahrbahnoberfläche anhand der erfassten Reifengeräusche des Fahrzeugs oder eines vorbeifahrenden Fremdfahrzeugs zu ermitteln. Alternativ oder zusätzlich kann die Vorrichtung ferner zumindest eine Kamera umfassen, mittels derer zur Erfassung der zumindest einen Information über einen Zustand der Fahrbahnoberfläche mindestens ein Bild der Fahrbahnoberfläche erfasst wird und/oder ein Verkehrszeichen und/oder Verkehrshinweise, das Hinweise auf Schnee- oder Glatteiswarnungen anzeigt.

Zur Vermeidung von Wiederholungen sollen rein verfahrensgemäß offenbarte Merkmale auch als vorrichtungsgemäß offenbart gelten und beanspruchbar sein und umgekehrt. Die vorgenannten Aspekte und erfindungsgemäßen Merkmale gelten somit auch für die Vorrichtung, insbesondere für die Steuereinrichtung, die ausgebildet ist, die Schritte des Verfahrens betreffend das Ermitteln der zumindest einen Information über einen Zustand der Fahrbahnoberfläche und das Steuern der Anfahrhilfe, wenn in Abhängigkeit von der zumindest einen Information ermittelt wurde, ob die Anfahrhilfe erforderlich ist oder nicht mehr erforderlich ist, durchzuführen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Darstellung eines Fahrzeugs mit einer Vorrichtung zur Steuerung einer Anfahrhilfe gemäß einer Ausführungsform der Erfindung;
- Figur 2: ein Ablaufdiagramm zur Illustration eines Verfahrens zur Steuerung einer Anfahrhilfe gemäß einer Ausführungsform der Erfindung, und
- Figur 3: ein Blockdiagramm zur Illustration der Steuerung einer Anfahrhilfe gemäß einer Ausführungsform der Erfindung.

Gleiche oder äquivalente Elemente sind in allen Figuren mit denselben Bezugszeichen bezeichnet und zum Teil nicht gesondert beschrieben.

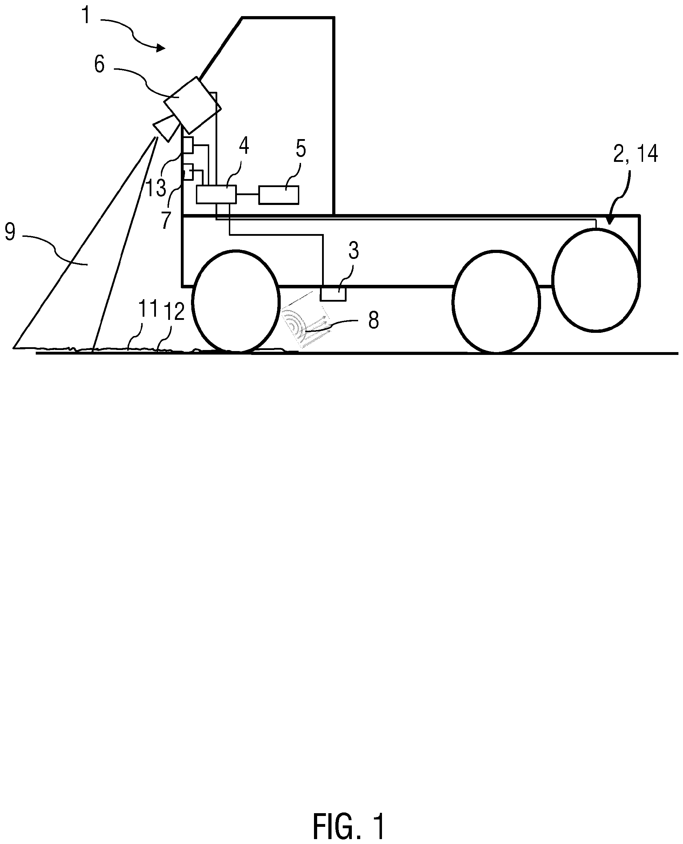

Figur 1 zeigt eine schematische Darstellung eines Fahrzeugs mit einer Vorrichtung zur Steuerung einer Anfahrhilfe gemäß einer Ausführungsform der Erfindung.

Das Fahrzeug 1 ist im dargestellten Beispiel ein Nutzfahrzeug wie ein Lastkraftwagen. Es kann sich aber auch um einen Omnibus oder jedes andere mehrachsige Fahrzeug, insbesondere um ein Fahrzeug mit einer Doppelachse, handeln. Vorzugsweise hat das Fahrzeug mindestens drei Achsen. Im dargestellten Beispiel hat das Fahrzeug 1 eine lenkbare Vorderachse, eine angetriebene zweite Achse und eine nachlaufende und entlastbare dritte Achse 2. Die dritte Achse 2 dient dazu, einen Teil der Last aufzunehmen, beispielsweise wenn das Fahrzeug 1 beladen ist, und so im normalen Fahrbetrieb die Achslast auf die zweite Achse zu verringern. Um insbesondere die Reifen der dritten Achse 2 nicht unnötig zu verschleißen, ist es seit Langem bekannt, die dritte Achse 2 anzuheben, wenn das Fahrzeug 1 nicht beladen ist und die zulässige Gesamtachslast der zweiten Achse somit nicht überschritten wird. Im dargestellten Beispiel ist die dritte Achse 2 angehoben bzw. entlastet dargestellt. Die dritte Achse 2 kann auch entlastet bzw. angehoben werden, um die Traktion der zweiten Achse zumindest kurzfristig zu erhöhen. In diesem Fall kann die zulässige Achslast der zweiten Achse auch zumindest kurzfristig überschritten werden. Somit stellt die entlastbare dritte Achse 2 eine Traktionshilfe 14 dar. Im dargestellten Beispiel ist die entlastbare dritte Achse 2 hinter der angetriebenen zweiten Achse dargestellt. Es ist jedoch genauso möglich, dass die entlastbare dritte Achse 2 in Fahrtrichtung vor der angetriebenen zweiten Achse angeordnet ist und somit als Vorlaufachse ausgebildet ist.

Wie in Figur 1 erkennbar ist, weist das Fahrzeug 1 eine Steuereinrichtung, z. B. eine zentrale Steuereinrichtung 4, auf, die eingangsseitige Informationen empfängt, aus denen ein Zustand der Fahrbahnoberfläche 11 ermittelbar ist. Die Steuereinrichtung 4 ist ausgebildet, anhand der empfangenen Informationen einen Zustand der Fahrbahnoberfläche zu ermitteln, insbesondere, ob die Fahrbahn schneebedeckt oder vereist ist. Mit dem Bezugszeichen 12 ist in Figur 1 ein schneebedeckter Abschnitt der Fahrbahnoberfläche 11 schematisch dargestellt.

Die Steuereinrichtung 4 ist ferner signaltechnisch (dargestellt durch eine durchgezogene schwarze Linie) mit einer Anfahrhilfe 14, hier der Liftachse 2, verbunden, um diese zu aktivieren, hier die Liftachse 2 anzuheben bzw. zu entlasten, falls die Steuereinrichtung 4 ermittelt hat, dass die Fahrbahn schneebedeckt oder vereist ist oder allgemein so rutschig ist und/ oder so einen geringen Fahrbahnreibwert aufweist, dass eine Anfahrhilfe 14 vonnöten ist. Die Steuereinrichtung kann die Liftachse 2 direkt ansteuern oder z.B. nur mittelbar über Ansteuerung eines weiteren Steuergeräts (nicht dargestellt), das wiederum die Liftachse direkt ansteuert, wie z. B. ein Luftfeder-Steuergerät.

Das Fahrzeug 1 kann in einem unteren Bereich in der Nähe eines der Reifen einen akustischen Sensor 3, z. B. ein Mikrofon, aufweisen, der die Abroll-Geräusche 8 eines Reifens akustisch erfassen kann. Die erfassten Reifengeräusche werden von dem akustischen Sensor 3 der Steuereinrichtung 4 zugeführt und dort ausgewertet. Mit an sich aus dem Stand der Technik bekannten Auswerteverfahren können anhand der Reifengeräusche Rückschlüsse auf die Beschaffenheit der Fahrbahnoberfläche gezogen werden, insbesondere, ob diese schneebedeckt und/oder vereist ist. Beispielsweise können vorab experimentell die Abrollgeräusche der Reifen für verschiedene Fahrbahnzustände (trockene Fahrbahn, schneebedeckte Fahrbahn, vereiste Fahrbahn etc.) erfasst und anhand von charakteristischen Merkmalen klassifiziert und in der Steuereinrichtung als Auswerte- und Erkennungslogik hinterlegt werden, so dass dann im Betrieb des Fahrzeugs anhand der aktuellen Reifengeräusche anhand der hinterlegten Auswerte- und Erkennungslogik ein Rückschluss auf die Beschaffenheit der Fahrbahnoberfläche gezogen werden kann.

Alternativ oder zusätzlich kann die Steuereinrichtung 4 die Messwerte eines Temperatursensors 7 empfangen und auswerten, welcher die Außentemperatur misst.

Alternativ oder zusätzlich kann das Fahrzeug 1 eine Kamera 6 aufweisen, deren Sichtkegel 9 eine Straßenoberfläche erfasst, wobei die entsprechenden Messwerte ebenfalls der Steuereinrichtung 4 zugeführt werden können. Mittels einer Bildauswertung kann die Steuereinrichtung 4 die von der Kamera 6 erfassten Bilder auswerten, um hieraus Rückschlüsse auf die Beschaffenheit der Fahrbahnoberfläche zu ziehen, insbesondere ob diese schneebedeckt und/oder vereist ist. Auch hier können vorab experimentell die Fahrbahnbilder der Kamera für verschiedene Fahrbahnzustände (trockene Fahrbahn, schneebedeckte Fahrbahn, vereiste Fahrbahn etc.) erfasst und anhand von Bildauswerte-Algorithmen analysiert und klassifiziert werden und in der Steuereinrichtung als weitere Auswerte- und Erkennungslogik hinterlegt werden, so dass dann im Betrieb des Fahrzeugs anhand der aktuellen Fahrbahnbilder anhand der hinterlegten Auswerte- und Erkennungslogik ein Rückschluss auf die Beschaffenheit der Fahrbahnoberfläche gezogen werden kann.

Alternativ oder zusätzlich kann die Steuereinrichtung 4 Informationen von einem Bremsregelsystem 5 des Fahrzeugs empfangen. Bei dem Bremsregelsystem 5 kann es sich beispielsweise um ein ESP-, ABS- und/oder ASR-Systems handeln. Die Steuereinrichtung 4 kann ausgebildet sein, in Abhängigkeit von den Informationen des Bremsregelsystems zu bestimmen, ob das Fahrzeug bei einem Anfahrvorgang ausbricht und/oder ein durchdrehendes Rad aufweist, und falls dies der Fall ist, kann auf eine rutschige Fahrbahnoberfläche geschlossen werden und die Notwendigkeit, die Anfahrhilfe zu aktivieren.

Alternativ oder zusätzlich kann die Steuereinrichtung 4 Informationen von einer Steuerung 13 der Scheibenwischanlage empfangen und diese Informationen ebenfalls dazu zu verwenden, um auf einen Zustand der Fahrbahnoberfläche zu schließen, vorzugsweise dann, wenn der Scheibenwischer bei Temperaturen unter oder um dem Gefrierpunkt aktiviert ist.

Zur Vereinfachung der Darstellung sind in Figur 1 mehrere Informationsquellen 3, 5, 7, 8 und 13 in Form von Sensoren 3, 6 und 7 oder in Form von anderen Betriebskomponenten 5 und 13 des Fahrzeugs 1 dargestellt. Das Fahrzeug 1 kann jedoch auch nur einen Teil hiervon aufweisen, bzw. die Steuereinrichtung 4 kann ausgebildet sein, Informationen von nur einem Teil dieser Informationsquellen zu empfangen und zu verarbeiten, was nachfolgend nochmals erläutert wird.

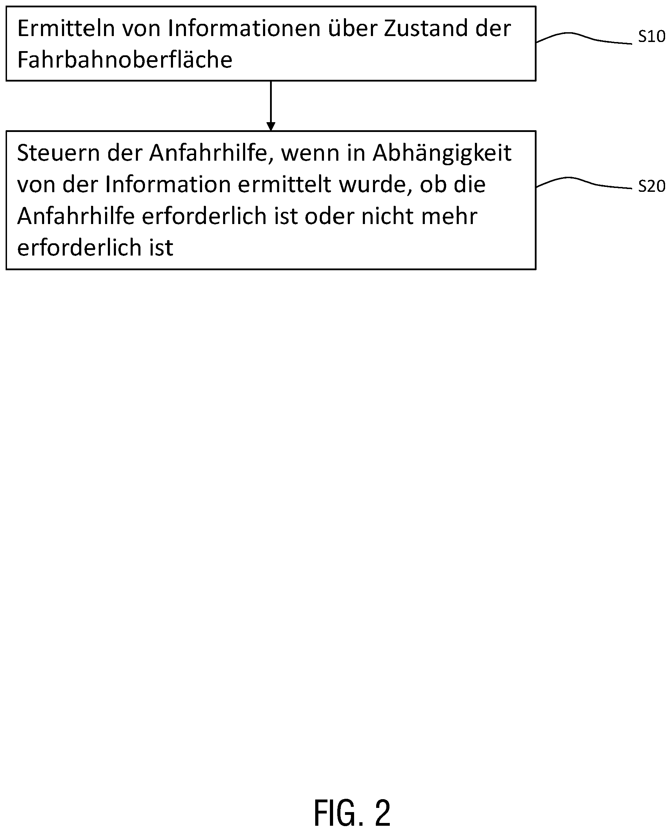

Figur 2 zeigt ein Ablaufdiagramm zur Illustration eines Verfahrens zur Steuerung einer Anfahrhilfe gemäß einer Ausführungsform der Erfindung. Das Verfahren umfasst einen Schritt S10, bei dem zumindest eine Information 30 über einen Zustand der Fahrbahnoberfläche 11 ermittelt wird. Beispielsweise kann ermittelt werden, ob der Zustand der Fahrbahnoberfläche derart ist, dass die Aktivierung einer Anfahrhilfe erforderlich ist, beispielsweise wenn die Fahrbahnoberfläche schneebedeckt oder vereist ist. Beispielsweise kann in Schritt S10 eine Information über den Zustand der Fahrbahnoberfläche anhand von Reifengeräuschen 8 des Fahrzeugs 1 oder eines vorbeifahrenden Fremdfahrzeugs ermittelt werden, die mittels des akustischen Sensors 3 des Fahrzeugs erfasst werden.

Das Verfahren umfasst ferner den Schritt S20, bei dem die Anfahrhilfe 14 angesteuert wird, wenn in Abhängigkeit von der zumindest einen Information 30 ermittelt wurde, ob die Anfahrhilfe 14 erforderlich ist oder nicht mehr erforderlich ist. Wenn beispielsweise mit dem akustischen Sensor 3 beim Anfahrvorgang Abrollgeräusche der Reifen erfasst werden, die typisch sind für schneebedeckte Fahrbahnoberflächen, kann auf eine schneebedeckte Fahrbahn geschlossen werden. Beispielsweise kann die Anfahrhilfe 14 aktiviert werden, wenn ermittelt wurde, dass die Fahrbahnoberfläche schneebedeckt oder vereist ist, und wieder deaktiviert werden, wenn der Anfahrvorgang erfolgreich abgeschlossen wurde oder die Fahrbahn nicht mehr schneebedeckt oder nicht mehr verreist ist.

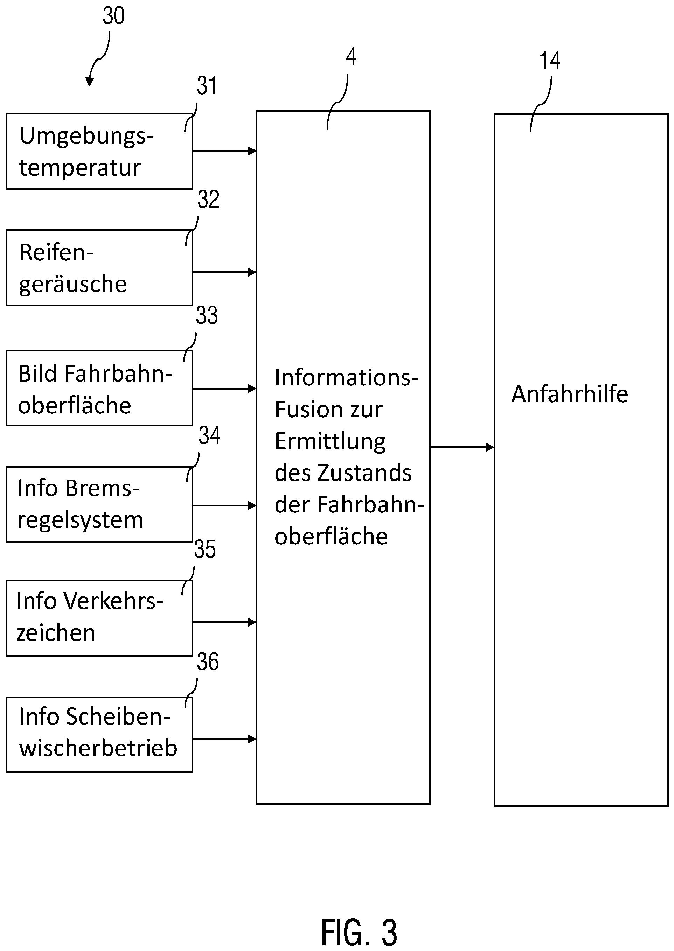

Figur 3 zeigt ein Blockdiagramm zur Illustration der Steuerung einer Anfahrhilfe gemäß einer Ausführungsform der Erfindung.

Die Steuereinrichtung kann ausgebildet sein, zur Ermittlung der zumindest einen Information 30 über einen Zustand der Fahrbahnoberfläche zumindest zwei, weiter vorzugsweise zumindest drei, der in Figur 3 gezeigten folgenden Informationen 30 zu empfangen und zu fusionieren, d. h. unterschiedliche Informationen 30 zu verknüpfen mit dem Ziel, zuverlässig den Zustand der Fahrbahnoberfläche zu ermitteln, dahingehend, ob eine Ansteuerung der Anfahrhilfe erforderlich ist oder nicht.

Die Informationen 30, die von der Steuereinrichtung 30 verwendet werden können, umfassen:
a) eine Umgebungstemperatur 31, gemessen mit dem Temperatursensor 7;
b) Reifengeräusche 32 des Fahrzeugs oder eines vorbeifahrenden Fremdfahrzeugs, die mittels des akustischen Sensors 3 des Fahrzeugs erfasst werden;
c) eine Information 34 des elektronischen Bremsregelsystems, insbesondere ob das Fahrzeug bei einem Anfahrvorgang ausbricht oder Räder durchdrehen;
d) ein von einer Kamera 6 des Fahrzeugs erfasstes Bild 33 der Fahrbahnoberfläche und/oder ein Bild 35 eines einen Hinweis (35) auf Schnee- oder Glatteiswarnungen anzeigenden Verkehrszeichens; und/ oder
e) eine Betriebsinformationen 36 eines Scheibenwischers 13.

Eine mögliche Realisierung sieht hierbei vor, dass zunächst bestimmt wird, ob die aktuelle Umgebungstemperatur unterhalb eines vorbestimmten Schwellenwerts liegt, der so gewählt ist, dass unterhalb dieses Schwellenwerts die Temperaturen niedrig genug sind, um schneebedeckte Straßen oder vereiste Straßen zu ermöglichen. Falls die Umgebungstemperatur unterhalb des Schwellenwerts liegt, werden ein oder mehrere der in diesem Dokument beschriebenen Ansätze und Informationen (wie Reifengeräuscherkennung, Bildauswertung der Fahrbahnoberfläche, Informationen eines Bremsregelsystems, Scheibenwischerbetrieb) herangezogen, um einen Zustand der Fahrbahnoberfläche zu ermitteln. Beispielsweise kann nur dann, wenn die Umgebungstemperatur unterhalb eines vordefinierten Schwellenwertes liegt, von der Steuereinrichtung anhand von erfassten Reifengeräuschen, erfassten Kamerabildern der Fahrbahnoberfläche oder eines Verkehrszeichens, Betriebsinformationen eines Scheibenwischers und/oder Informationen eines elektronischen Bremsregelsystems ermittelt werden, ob die Fahrbahnoberfläche vereist oder schneebedeckt ist.

Der Vorteil dieses Ansatzes liegt darin, dass eine besonders zuverlässige Erkennung eines Zustands der Fahrbahnoberfläche möglich ist, bei dem die Anfahrhilfe zu aktivieren ist oder nicht. Beispielsweise kann anhand der erfassten Reifengeräusche festgestellt werden, ob die Fahrbahn schneebedeckt ist oder nicht. Es kann jedoch sein, dass trotz schneebedeckter Fahrbahn ein Anfahren ohne Anfahrhilfe möglich ist. Wenn jedoch anhand der Informationen des Bremsregelsystems festgestellt wird, dass das Fahrzeug beim Anfahrvorgang ausbricht, kann zuverlässig davon ausgegangen werden, dass die Anfahrhilfe benötigt wird. Daher kann durch zusätzliche Verwendung von Informationen des Bremsregelsystems eine genauere Erkennung von Situationen erfolgen, in denen die Anfahrhilfe angesteuert werden muss.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Fahrzeug
- 2: Liftachse
- 3: Akustischer Sensor
- 4: Steuereinrichtung
- 5: Bremsregelsystem
- 6: Kamera
- 7: Umgebungstemperatursensor
- 8: Reifengeräusche
- 9: Sichtkegel
- 11: Fahrbahnoberfläche
- 12: Schneebedeckung
- 13: Scheibenwischanlage
- 14: Anfahrhilfe
- 30: Informationen über den Zustand der Fahrbahnoberfläche
- 31: Umgebungstemperatur
- 32: Reifengeräusche
- 33: Bildinformation der Fahrbahnoberfläche
- 34: Informationen des Bremsregelsystem
- 35: Bildinformationen eines Verkehrszeichens
- 36: Informationen eines Scheibenwischerbetriebs
- S10, S20: Verfahrensschritte

## Patentansprüche

1. Verfahren zur Steuerung einer Anfahrhilfe (14) eines Fahrzeugs (1), vorzugsweise eines Nutzfahrzeugs, wobei das Verfahren umfasst:
Ermitteln (S10) zumindest einer Information (30) über einen Zustand der Fahrbahnoberfläche (11);
Steuern (S20) der Anfahrhilfe (14), wenn in Abhängigkeit von der zumindest einen Information (30) ermittelt wurde, ob die Anfahrhilfe (14) erforderlich ist oder nicht mehr erforderlich ist,
**dadurch gekennzeichnet, dass** eine Information über den Zustand der Fahrbahnoberfläche anhand von Reifengeräuschen (8) des Fahrzeugs (1) oder eines vorbeifahrenden Fremdfahrzeugs ermittelt wird, die mittels eines akustischen Sensors (3) des Fahrzeugs erfasst werden.

2. Verfahren nach Anspruch 1, **dadurch gekennzeichnet, dass** zumindest eine Information (30) über einen Zustand der Fahrbahnoberfläche (11) mittels eines elektronischen Bremsregelsystems (5), beispielsweise eines ESP-, ABS-, und/oder ASR-Systems, bestimmt wird.

3. Verfahren nach Anspruch 2, **dadurch gekennzeichnet, dass** wenn anhand des Bremsregelsystems festgestellt wird, dass das Fahrzeug bei einem Anfahrvorgang ausbricht oder mindestens ein Rad durchdreht, bestimmt wird, dass der Zustand der Fahrbahnoberfläche (11) derart ist, dass eine Anfahrhilfe (14) erforderlich ist und/oder dass die Anfahrhilfe (14) aktiviert wird.

4. Verfahren nach einem der vorhergehenden Ansprüche, **dadurch gekennzeichnet, dass** zumindest eine Information (30) über einen Zustand der Fahrbahnoberfläche (11) mittels eines von einer Kamera (6) des Fahrzeugs erfassten
a) Bildes der Fahrbahnoberfläche bestimmt wird; und/oder
b) Verkehrszeichens, das Hinweise auf Schnee- oder Glatteiswarnungen anzeigt, bestimmt wird.

5. Verfahren nach einem der vorhergehenden Ansprüche, **dadurch gekennzeichnet, dass** zumindest eine Information (30) über einen Zustand der Fahrbahnoberfläche unter Verwendung einer sensorisch erfassten Umgebungstemperatur bestimmt wird.

6. Verfahren nach einem der vorhergehenden Ansprüche, **dadurch gekennzeichnet, dass** zumindest eine Information (30) über einen Zustand der Fahrbahnoberfläche (11) anhand eines Betriebs eines Scheibenwischers (13) bestimmt wird, falls dieser unterhalb einer vorbestimmten Temperaturschwelle aktiviert ist.

7. Verfahren nach einem der vorhergehenden Ansprüche, **dadurch gekennzeichnet, dass** zur Ermittlung der zumindest einer Information (30) über einen Zustand der Fahrbahnoberfläche (11) eine Steuereinrichtung (4) des Fahrzeugs (1) zumindest zwei, weiter vorzugsweise zumindest drei, der folgenden Informationen fusioniert werden:
a) eine Umgebungstemperatur (31);
b) Reifengeräusche (32) des Fahrzeugs oder eines vorbeifahrenden Fremdfahrzeugs, die mittels eines akustischen Sensors des Fahrzeugs erfasst werden;
c) eine Information (34) eines elektronischen Bremsregelsystems;
d) von einer Kamera des Fahrzeugs erfassten Bildes (33) der Fahrbahnoberfläche und/oder eines Hinweises (35) auf Schnee- oder Glatteiswarnungen anzeigenden Verkehrszeichens; und
e) Betriebsinformationen eines Scheibenwischers (36).

8. Verfahren nach einem der vorhergehenden Ansprüche, **dadurch gekennzeichnet, dass** die zumindest eine Information (30) über einen Zustand der Fahrbahnoberfläche (11) umfasst, ob die Fahrbahnoberfläche vereist oder schneebedeckt ist, und dass die Anfahrhilfe aktiviert wird, falls die Fahrbahnoberfläche schneebedeckt oder vereist ist.

9. Verfahren nach einem der vorhergehenden Ansprüche 7 und 8, **dadurch gekennzeichnet, dass** nur, falls die Umgebungstemperatur unterhalb eines vordefinierten Schwellenwertes liegt, von der Steuereinrichtung (4) anhand von erfassten Reifengeräuschen, erfassten Kamerabildern der Fahrbahnoberfläche oder eines Verkehrszeichens, Betriebsinformationen eines Scheibenwischers und/oder Informationen eines elektronischen Bremsregelsystems ermittelt wird, ob die Fahrbahnoberfläche vereist oder schneebedeckt ist.

10. Verfahren nach einem der vorhergehenden Ansprüche, **dadurch gekennzeichnet, dass** zur Ermittlung der zumindest einen Information (30) über einen Zustand der Fahrbahnoberfläche (11) Reifengeräusche (32) des Fahrzeugs oder eines vorbeifahrenden Fremdfahrzeugs, die mittels eines akustischen Sensors des Fahrzeugs erfasst werden, unter Verwendung eines künstlichen neuronalen Netzes ausgewertet werden.

11. Verfahren nach einem der vorhergehenden Ansprüche, **dadurch gekennzeichnet, dass**, falls das Fahrzeug in einem elektronisch verbunden Konvoi mit mindestens einem Fremdfahrzeug, im sog. Platooning-Betrieb, fährt und die Anfahrhilfe des Fahrzeugs aktiviert wurde, eine Nachricht von dem Fahrzeug für die Fremdfahrzeuge des Konvois erzeugt wird, die angibt, dass die Anfahrhilfe des Fahrzeugs aktiviert wurde.

12. Verfahren nach einem der vorhergehenden Ansprüche, **dadurch gekennzeichnet, dass** das Steuern der Anfahrhilfe das Entlasten einer Achse des Fahrzeugs umfasst.

13. Vorrichtung zur Steuerung einer Anfahrhilfe (14) eines Fahrzeugs (1), vorzugsweise eines Nutzfahrzeugs, umfassend:
einen akustischen Sensor (3) zur Erfassung von Reifengeräuschen des Fahrzeugs oder eines vorbeifahrenden Fremdfahrzeugs;
eine Steuereinrichtung (4), die ausgebildet ist, zumindest eine Information (30) über einen Zustand der Fahrbahnoberfläche (11) zu ermitteln und die Anfahrhilfe anzusteuern, wenn in Abhängigkeit von der Information ermittelt wurde, ob die Anfahrhilfe (14) erforderlich ist oder nicht mehr erforderlich ist, wobei eine Information über den Zustand der Fahrbahnoberfläche anhand der erfassten Reifengeräusche (32) des Fahrzeugs oder eines vorbeifahrenden Fremdfahrzeugs ermittelt wird.

14. **Kraftfahrzeug (1), vorzugsweise Nutzfahrzeug, wie beispielsweise ein Lastkraftwagen** oder Omnibus, mit einer Vorrichtung nach Anspruch 13.

15. Kraftfahrzeug (1) nach Anspruch14, nämlich ein Nutzfahrzeug mit mindestens einer Liftachse (2), die von der Steuereinrichtung (4) zur Ausbildung der Anfahrhilfe derart angesteuert wird, dass die Liftachse (2) entlastet und/oder angehoben wird.
